# EUROPÄISCHE PATENTANMELDUNG

(11) **EP 4 607 712 A1**
(43) Veröffentlichungstag der Anmeldung: **27.08.2025**
(21) Anmeldenummer: 24159275.7
(22) Anmeldetag: 23.02.2024
(51) Int. Cl.: H01R 13/187, H01R 43/16, F16F 1/00, H01R 13/11

(54) **ELEKTRISCHES VERBINDUNGSELEMENT**

(71) Anmelder: ROSENBERGER HOCHFREQUENZTECHNIK GMBH & CO. KG, 83413 Fridolfing (DE)
(72) Erfinder: Blakborn, Willem, 83413 Fridolfing (DE)
(74) Vertreter: Lorenz, Matthias

(57) **Zusammenfassung**

Die vorliegende Erfindung betrifft ein elektrisches Verbindungselement. Die vorliegende Erfindung betrifft ferner eine elektrische Verbindung. Die vorliegende Erfindung betrifft schließlich auch noch ein Verfahren zur Herstellung eines elektrischen Verbindungselements.

Ein elektrisches Verbindungselement (1) zum elektrischen Verbinden eines Kontaktelements (15) mit einem zugehörigen Gegenkontaktelement (16) weist ein metallisches Band (2) mit einer Mittenachse M auf. Entlang der Mittenachse M sind abwechselnd an einem ersten Seitenende S₁ des metallischen Bandes (2) jeweils erste Abschnitte (3) des metallischen Bandes (2) und an einem zweiten Seitenende S₂ des metallischen Bandes (2) jeweils zweite Abschnitte (4) des metallischen Bandes (2) ausgebildet. Jeder erste Abschnitt (3) ist jeweils mit den beiden nächst benachbarten zweiten Abschnitten (4) des metallischen Bandes (2) verbunden. Die ersten Abschnitte (3) und die zweiten Abschnitte (4) sind jeweils um eine Rotationsachse R₁, R₂ gebogen, die jeweils parallel zur Mittenachse M verläuft. Jeder erste Abschnitt (3) ist jeweils derart gebogen, um jeweils das Kontaktelement (15) zu kontaktieren, und jeder zweite Abschnitt (4) ist jeweils derart gebogen, um jeweils das Gegenkontaktelement (16) zu kontaktieren.

## Beschreibung

### GEBIET DER ERFINDUNG

Die vorliegende Erfindung betrifft ein elektrisches Verbindungselement zum elektrischen Verbinden eines Kontaktelements mit einem zugehörigen Gegenkontaktelement.

Die Erfindung betrifft außerdem eine elektrische Verbindung.

Die Erfindung betrifft schließlich ein Verfahren zur Herstellung eines elektrischen Verbindungselements.

### TECHNISCHER HINTERGRUND

In einer steckbaren und wieder lösbaren Verbindung zur Übertragung von Daten und von elektrischer Energie sind elektrische Steckverbindungen aus einem elektrischen Steckverbinder und einem zugehörigen elektrischen Gegensteckverbinder bekannt. Im gesteckten Zustand der Steckverbindung kontaktieren Kontaktelemente des Steckverbinders zugehörige Gegenkontaktelemente des Gegensteckverbinders. Bei der Übertragung von elektrischer Energie und somit von hohen Strömen werden vorzugsweise starre Kontaktelemente und starre Gegenkontaktelemente mit jeweils einem ausreichend großen Querschnitt verwendet.

Ein starres Kontaktelement kontaktiert ein starres Gegenkontaktelement üblicherweise nicht flächig, sondern punktförmig. Auch wird typischerweise zwischen einem starren Kontaktelement und einem starren Gegenkontaktelement aufgrund fehlender Elastizität kein Kontaktdruck erzeugt. Beides schmälert die Übertragung von hohen

Strömen zwischen dem Kontaktelement und dem Gegenkontaktelement. Um diesen technischen Nachteil zu überwinden, ist zwischen dem starren Kontaktelement und dem starren Gegenkontaktelement üblicherweise ein elektrisches Verbindungselement mit einer ausreichend hohen Anzahl von elastisch ausgebildeten Kontaktierungsbereichen angeordnet.

Als ein elektrisches Verbindungselement für rotationssymmetrische oder flache Kontaktelemente bzw. Gegenkontaktelemente ist ein Kontaktblech bzw. eine Kontakthülse mit jeweils mehreren Kontaktlamellen bekannt. Eine Kontakthülse mit Kontaktlamellen ist beispielsweise in der EP 3 357 127 B1 offenbart. Derartige Kontaktlamellen sind lang ausgebildet und verlieren im Laufe der Zeit ihre Elastizität und damit ihre gute elektrische und mechanische Übertragungseigenschaft. Alternativ ist eine torusförmige Ringfeder als ein elektrisches Verbindungselement für rotationssymmetrische Kontaktelemente bzw. Gegenkontaktelemente im Einsatz, wie sie beispielsweise in der EP 2 387 113 B1 offenbart ist. Eine derartige torusförmige Kontaktfeder ist nachteilig mit zu hohen Herstellungskosten verbunden.

Dies ist ein Zustand, den es zu verbessern gilt.

### BESCHREIBUNG DER ERFINDUNG

Vor diesem Hintergrund liegt der vorliegenden Erfindung die Aufgabe zugrunde, ein elektrisches Verbindungselement zum elektrischen Verbinden eines Kontaktelements mit einem zugehörigen Gegenkontaktelement mit verbesserten elektrischen und mechanischen Eigenschaften und reduzierten Herstellungskosten zu schaffen.

Erfindungsgemäß wird diese Aufgabe durch ein elektrisches Verbindungselement mit den Merkmalen des Patentanspruchs 1 gelöst.

Demgemäß ist vorgesehen:
Ein elektrisches Verbindungselement zum elektrischen Verbinden eines Kontaktelements mit einem zugehörigen Gegenkontaktelement aufweisend
- ein metallisches Band mit einer Mittenachse,
- wobei entlang der Mittenachse abwechselnd an einem ersten Seitenende des metallischen Bandes jeweils erste Abschnitte des metallischen Bandes und
- an einem zweiten Seitenende des metallischen Bandes jeweils zweite Abschnitte des metallischen Bandes ausgebildet sind,
- wobei jeder erste Abschnitt jeweils mit den beiden nächst benachbarten zweiten Abschnitten des metallischen Bandes verbunden ist,
- wobei die ersten Abschnitte und die zweiten Abschnitte jeweils um eine Rotationsachse gebogen sind, die jeweils parallel zur Mittenachse verläuft,
- wobei jeder erste Abschnitt jeweils derart gebogen ist, um jeweils das Kontaktelement zu kontaktieren, und jeder zweite Abschnitt jeweils derart gebogen ist, um jeweils das Gegenkontaktelement zu kontaktieren.

Die der vorliegenden Erfindung zugrunde liegende Erkenntnis/Idee besteht darin, in einem ursprünglich planaren länglichen metallischen Band mit einer Mittenachse relativ zur Mittenachse abwechselnd an einem ersten Seitenende des metallischen Bandes erste Abschnitte des metallischen Bandes und an einem gegenüberliegenden zweiten Seitenende des metallischen Bandes zweite Abschnitte des metallischen Bandes auszubilden und jeden ersten Abschnitt mit den beiden nächst benachbarten zweiten Abschnitten zu verbinden. Somit entsteht ein ursprünglich planares metallisches Band mit einer periodischen Form relativ zur Mittenachse, vorzugsweisen mit einer wellenförmigen Form relativ zur Mittenachse. Die ersten und die zweiten Abschnitte eines derart geformten metallischen Bandes sind schließlich jeweils um eine zur Mittenachse parallele Rotationsachse derart gebogen, dass ein elektrisches Verbindungselement mit einer wannenförmige Grundgeometrie und einem teilringförmigen Querschnittsprofil entsteht. Die ersten Abschnitte des metallischen Bandes, welche jeweils an einer Seitenwand des hülsen- oder wannenförmigen elektrischen Verbindungselements angeordnet sind, bilden jeweils eine Kontaktierung zum Kontaktelement (vorzugsweise über zugehörige Kontaktpunkte). Die zweiten Abschnitte des metallischen Bandes, welche jeweils an der gegenüberliegenden Seitenwand des wannenförmigen elektrischen Verbindungselements angeordnet sind, bilden jeweils eine Kontaktierung zum Gegenkontaktelement (vorzugsweise über zugehörige Kontaktpunkte).

Die gebogenen ersten Abschnitte des metallischen Bandes, die über dazwischen befindliche Spalte bzw. Ausnehmungen voneinander getrennt sind, wirken jeweils als Federarme des elektrischen Verbindungselements und ermöglichen aufgrund der Elastizität der Federarme eine Kontaktierung des Kontaktelements mit einem ausreichenden Kontaktdruck. Äquivalent wirken die gebogenen zweiten Abschnitte des metallischen Bandes, die ebenfalls über dazwischen befindliche Spalte bzw. Ausnehmungen voneinander getrennt sind, ebenfalls jeweils als Federarme des elektrischen Verbindungselements und ermöglichen aufgrund der Elastizität der Federarme eine Kontaktierung des Gegenkontaktelements mit einem ausreichenden Kontaktdruck.

Aufgrund der Elastizität der ersten und der zweiten Abschnitte des metallischen Bandes stellt sich flexibel ein entsprechender Abstand zwischen den Kontaktpunkten der ersten Abschnitte und den Kontaktpunkten der zweiten Abschnitte des metallischen Bandes in Abhängigkeit des Abstands zwischen dem Kontaktelement und dem Gegenkontaktelements ein. Es stellt sich also ein bestimmter Durchmesser des teilringförmigen Querschnittsprofils im wannenförmigen Grundprofil des elektrischen Verbindungselements ein.

Vorzugsweise ist der Abstand zwischen dem Kontaktelement und dem zugehörigen Gegenkontaktelement konstant, so dass der Durchmesser des teilringförmigen Querschnittprofils des elektrischen Verbindungselements und somit der Abstand zwischen den Kontaktpunkten der ersten Abschnitte und den Kontaktpunkten der zweiten Abschnitte des metallischen Bandes über die gesamte Längserstreckung des metallischen Bandes konstant ausgebildet ist. Alternativ lässt sich ein Abstand zwischen dem Kontaktpunkt jedes einzelnen ersten Abschnitts und den Kontaktpunkten der jeweils nächstbenachbarten zweiten Abschnitte des metallischen Bandes aufgrund der individuellen Elastizität jedes einzelnen ersten und zweiten Abschnitts des metallischen Bandes jeweils individuell einstellen. Somit lässt sich im Fall von fertigungsbedingten Oberflächenschwankungen der Kontaktflächen des Kontaktelements und des Gegenkontaktelements ein entlang der Längserstreckung des metallischen Bandes veränderlicher Abstand zwischen dem Kontaktelement und dem Gegenkontaktelement mit dem elektrischen Verbindungselement überbrücken.

Auch eine gestufte oder eine kontinuierliche Änderung an der Kontaktfläche des Kontaktelements und/oder an der Kontaktfläche des Gegenkontaktelements ohne eine Änderung des Abstands zwischen dem Kontaktelement und dem Gegenkontaktelement lässt sich mit dem elektrischen Verbindungselement überbrücken, da der Abstand zwischen dem Kontaktpunkt jedes einzelnen ersten Abschnitts gegenüber dem Kontaktpunkt des sich jeweils anschließenden zweiten Abschnitts des metallischen Bandes veränderbar ist.

Die ersten Abschnitte des metallischen Bandes sind vorzugsweise jeweils unmittelbar mit den beiden nächst benachbarten zweiten Abschnitten des metallischen Bandes, insbesondere mit jeweils einer nächstbenachbarten Anschlussstelle der beiden nächstbenachbarten zweiten Abschnitte des metallischen Bandes, verbunden.

Alternativ können die ersten Abschnitte des metallischen Bandes mittelbar über jeweils einen dritten Abschnitt des metallischen Bandes mit den beiden nächstbenachbarten zweiten Abschnitten des metallischen Bandes verbunden sein, d. h. zwischen jedem ersten Abschnitt und den beiden jeweils nächst benachbarten zweiten Abschnitten ist jeweils ein dritter Abschnitt des metallischen Bandes ausgebildet, der den jeweiligen ersten Abschnitt mit einem zweiten Abschnitt der beiden jeweils nächst benachbarten zweiten Abschnitte mittelbar verbindet. In diesem Fall handelt es sich jeweils um einen dritten Abschnitt des metallischen Bandes, welcher jeweils eine zur Quererstreckung größere Längserstreckung aufweist, die den Federarm der ersten und der zweiten Abschnitte des metallischen Bandes jeweils um die halbe Länge der jeweiligen dritten Abschnitte verlängert. Somit ist die Ausbildung eines elektrischen Verbindungselement mit einer vergrößerten Elastizität zwischen den gebogenen ersten und den gebogenen zweiten Abschnitten des metallischen Bandes möglich.

Bei dem Kontaktelement und dem zugehörigen Gegenkontaktelement handelt es sich jeweils um einen starren Körper aus einem Material mit einer hohen elektrischen Leitfähigkeit, vorzugsweise aus einem Metall, insbesondere aus Kupfer oder Aluminium, oder aus einer Metalllegierung. Das Kontaktelement und das Gegenkontaktelement können jeweils als ein Flachkontakt, d. h. als ein Kontaktschwert und ein zugehöriges U-förmiges Kontaktelement ausgebildet sein. Das zugehörige elektrische Verbindungselement, das zwischen dem Kontaktelement und dem Gegenkontaktelement angeordnet ist und das Kontaktelement und das Gegenkontaktelement jeweils lateral kontaktiert, weist somit eine wannenförmige Grundgeometrie mit einer linear verlaufenden Mittenachse und ein teilringförmiges Querschnittsprofil auf. Zur elektrischen Verbindung zwischen zwei Flachkontaktelementen ist aber auch ein elektrisches Verbindungselement mit einer kreisförmig verlaufenden Mittenachse, d. h. mit einer ringförmigen Grundgeometrie, denkbar, dessen Längsachse senkrecht zu den Kontaktflächen der beiden Flachkontaktelemente orientiert ist.

Alternativ können das Kontaktelement und das Gegenkontaktelement jeweils als rotationssymmetrische Kontakte, d. h. als stiftförmige oder hülsenförmige Kontakte, ausgebildet sein. Das zugehörige elektrische Verbindungselement, das zwischen dem Kontaktelement und dem Gegenkontaktelement angeordnet ist und das Kontaktelement und das Gegenkontaktelement jeweils radial kontaktiert, weist in diesem Fall eine wannenförmige Grundgeometrie mit einer kreisförmig verlaufenden Mittenachse, d. h. eine ringförmige Grundgeometrie mit einem teilringförmigen Querschnittsprofil, auf. Denkbar sind aber auch noch andere Geometrien für das Kontaktelement und das zugehörige Gegenkontaktelement, beispielsweise eine konische Geometrie oder eine Geometrie mit einem quadratischen, rechteckförmigen, polygonalen oder elliptischen Querschnittsprofil.

Schließlich kann das elektrische Verbindungselement mit einer ringförmigen Grundgeometrie und einem teilringförmigen Querschnittsprofil auch ein Kontaktelement und ein zugehöriges Gegenkontaktelement mit jeweils einer hülsenförmigen Geometrie stirnseitig miteinander elektrisch verbinden.

Die ersten und die zweiten Abschnitte des planaren metallischen Bandes bilden einen periodischen Verlauf des planaren metallischen Bandes. In einer ersten Variante des elektrischen Verbindungselements weisen die einzelnen ersten und zweiten Abschnitte des metallischen Bandes vorzugsweise jeweils eine konstante Erstreckung in einer Richtung parallel zur Mittenachse des metallischen Bandes auf. In einer zweiten Variante des elektrischen Verbindungselements weisen die einzelnen ersten Abschnitte des metallischen Bandes vorzugsweise jeweils eine konstante Erstreckung in einer Richtung parallel zur Mittenachse des metallischen Bandes auf, die größer als die jeweils konstante Erstreckung jedes zweiten Abschnitts des metallischen Bandes in dieser Richtung ist.

Somit sind die an den einzelnen ersten Abschnitten des metallischen Bandes ausgebildeten Kontaktpunkte zur Kontaktierung des Kontaktelements und die an den einzelnen zweiten Abschnitten des metallischen Bandes ausgebildeten Kontaktpunkte zur Kontaktierung des Gegenkontaktelements jeweils äquidistant voneinander beabstandet. Bei einer Ausprägung eines elektrischen Verbindungselements mit einer ringförmigen Grundstruktur sind die einzelnen Kontaktpunkte der ersten Abschnitte und die einzelnen Kontaktpunkte der zweiten Abschnitte jeweils in äquidistanten Winkelsegmenten voneinander beabstandet. In beiden Fällen ist eine gleichmäßig verteilte Übertragung hoher Ströme zwischen dem Kontaktelement und dem Gegenkontaktelement verwirklicht, sofern es sich bei dem Kontaktelement und dem zugehörigen Gegenkontaktelement jeweils um ein Innenleiterkontaktelement handelt. Bilden das Kontaktelement und das zugehörige Gegenkontaktelement jeweils ein Außenleiterkontaktelement, so ist durch eine derartige technische Ausprägung eine gute Schirmdichtigkeit erzielbar.

Denkbar ist in einer weniger bevorzugten Ausprägung der Erfindung aber auch ein nicht periodischer Verlauf des planaren metallischen Bandes, in dem sich die einzelnen ersten und zweiten Abschnitte des metallischen Bandes jeweils in einer Richtung zur Mittenachse des metallischen Bandes nicht konstant erstrecken und somit die Kontaktpunkte der ersten Abschnitte und die Kontaktpunkte der zweiten Abschnitte jeweils unterschiedlich voneinander beabstandet sind.

Die ersten Abschnitte des metallischen Bandes sind jeweils um eine Rotationsachse gebogen, die unterschiedlich zu einer dazu parallelen Rotationsachse ist, um die die zweiten Abschnitte des metallischen Bandes jeweils gebogen sind. Im Querschnittsprofil des elektrischen Verbindungsprofils verlaufen die gebogenen ersten Abschnitte getrennt von den gebogenen zweiten Abschnitten des metallischen Bandes. Eine teilweise Überlappung der gebogenen ersten Abschnitte und der gebogenen zweiten Abschnitte des metallischen Bandes im Querschnittsprofil des elektrischen Verbindungsprofils ist nicht ausgebildet. Allenfalls weist die wannenförmige Grundstruktur des elektrischen Verbindungselements mit einem teilringförmigen Querschnittsprofil einen Längsschlitz auf, welcher parallel zur Mittenachse des metallischen Bandes des elektrischen Verbindungselements verläuft.

Denkbar ist aber auch, dass die ersten Abschnitte des metallischen Bandes jeweils um mehrere Rotationsachsen und die zweiten Abschnitte des metallischen Bandes jeweils um mehrere andere Rotationsachsen gebogen sind, um ein elektrisches Verbindungselement mit einer komplexeren Querschnittsform zu erzielen.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die planare Ausformung des metallischen Bandes mit sich jeweils wiederholenden Sequenzen aus jeweils einem ersten Abschnitt und einem zweiten Abschnitt und die sich anschließende Biegung der ersten und der zweiten Abschnitte kann vorzugsweise mittels einer Stanz-Biegetechnik verwirklicht werden. Auf diese Weise lässt sich ein derartiges elektrisches Verbindungselement hochautomatisiert in einer hohen Stückzahl zu minimierten Fertigungskosten herstellen. Die Stanz-Biegetechnik ermöglicht auch eine einfache Anpassung an unterschiedliche Parameter wie Größe, Geometrie und/oder Material des zu fertigenden elektrischen Verbindungselements.

In einer weiteren vorzugsweisen Ausprägung der Erfindung kann das elektrische Verbindungselement zur elektrischen Verbindung zwischen einem rotationssymmetrisch ausgebildeten Kontaktelement und einem ebenfalls rotationssymmetrisch ausgebildeten Gegenkontaktelement verwirklicht sein. Hierzu kann die Mittenachse des metallischen Bandes kreisförmig insbesondere relativ zu einer Längsachse des elektrischen Verbindungselements gebogen sein. Die ersten Abschnitte des metallischen Bandes können hierbei jeweils derartig gebogen sein, dass sie relativ zur Längsachse des elektrischen Verbindungselements das Kontaktelement radial nach außen kontaktieren. Die zweiten Abschnitte des metallischen Bandes können hierbei jeweils derartig gebogen sein, dass sie relativ zur Längsachse des elektrischen Verbindungselements das Gegenkontaktelement radial nach innen kontaktieren. Eine radial nach innen gerichtete Kontaktierung bedeutet hierbei eine Kontaktierung in einer Richtung zur Längsachse, während eine radial nach außen gerichtete Kontaktierung eine Kontaktierung in einer Richtung weg von der Längsachse bedeutet.

Zum elektrischen Verbinden eines Kontaktelements, dessen Durchführung alternativ ein elliptisches, rechteckförmiges, quadratisches oder polygonales Querschnittsprofil aufweist, mit einem Gegenkontaktelement, dessen Querschnittsprofil konsequenterweise elliptisch, rechteckförmig, quadratisch oder polygonal ausgebildet ist, ist alternativ auch ein elektrisches Verbindungselement mit einem elliptisch, rechteckförmig, quadratisch oder polygonal geschlitzten Querschnittsprofil denkbar.

Damit die ersten Abschnitte des metallischen Bandes jeweils eine Kontaktierung des Kontaktelements und die zweiten Abschnitte des metallischen Bandes jeweils eine Kontaktierung des Gegenkontaktelements verwirklichen können, können die ersten Abschnitte des metallischen Bandes jeweils in einer entgegengesetzten Drehrichtung als die zweiten Abschnitte des metallischen Bandes gebogen sein. Jeder erste Abschnitt des metallischen Bandes kann jeweils in einer Uhrzeigerrichtung, d. h. in einer Drehrichtung nach "rechts", gebogen sein, während jeder zweite Abschnitt des metallischen Bandes jeweils in einer Gegenuhrzeigerrichtung, d. h. in einer Drehrichtung nach "links", gebogen sein kann.

In einer bevorzugten Ausprägung der Erfindung kann das elektrische Verbindungselement ein C-förmiges Querschnittsprofil aufweisen. Auch das C-förmige Querschnittsprofil des elektrischen Verbindungselements ermöglicht eine Stromübertragung über zwei Strompfade zwischen einer kontaktelementseitigen Kontaktfläche und zwei gegenkontaktelementseitigen Kontaktflächen. Die Stromübertragungsfähigkeit zwischen dem Kontaktelement und dem Gegenkontaktelement ist somit bei gleichzeitig realisierter Elastizität ebenfalls verbessert. Das elektrische Verbindungselement mit dem C-förmigen Querschnittsprofil kann schließlich eine Elastizität in radialer Richtung, in axialer Richtung und in Umfangrichtung des elektrischen Verbindungselements ermöglichen.

Die kreisförmig gebogene Mittenachse des metallischen Bandes kann in einer vorzugsweisen Ausprägung kreisförmig geschlossen ausgebildet sein. Hierzu kann ein erstes axiales Ende des metallischen Bandes vorzugsweise mit einem zweiten axialen Ende des metallischen Bandes vorzugsweise stoffschlüssig, beispielsweise mittels einer Schweißung oder einer Lötung, verbunden sein. Hierzu kann wenigstens ein Schweiß- oder wenigstens ein Lötpunkt eine ausreichende Verbindungsfestigkeit zwischen dem ersten axialen Ende und dem zweiten axialen Ende bewirken. Alternativ ist auch ein formschlüssiges Verbinden, beispielsweise mittels Clinchens, denkbar.

In einer weniger bevorzugten Ausprägung der Erfindung kann die kreisförmig gebogene Mittenachse des metallischen Bandes auch nicht geschlossen ausgebildet sein. In diesem Fall kann das elektrischen Verbindungselement beispielsweise in einer passend ausgeformten kreisförmigen Nut des Kontaktelements derart eingefügt sein, dass die Mittenachse des metallischen Bandes eine kreisförmige Biegung erfährt. Das erste axiale Ende und das zweite axialer Ende des metallischen Bandes können in der kreisförmig ausgebildeten Nut derart zu liegen kommen, dass sie sich gegenseitig kontaktieren oder geringfügig zueinander beabstandet sind.

Wird ein elektrisches Verbindungselement bereits mit einer kreisförmig geschlossenen Mittenachse mittels einer Trenntechnik, vorzugsweise mittels Stanzens, hergestellt, d. h. ohne ein stoff- oder formschlüssiges Verbinden eines ersten axialen Endes mit einem zweiten axialen Ende des metallischen Bandes, so kann eine Erstreckung der ersten Abschnitte in einer Richtung parallel zur Mittenachse jeweils größer als die Erstreckung der zweiten Abschnitte ausgebildet sein. Somit ist ein planares metallisches Band eines elektrischen Verbindungselements mittels Stanzens herstellbar, in dem die ersten Abschnitte des metallischen Bandes radial außerhalb der geschlossen Mittenachse und die zweiten Abschnitte des metallischen Bandes innerhalb des geschlossenen Mittenachse, d. h. in Richtung der Längsachse des elektrischen Verbindungselements, anordenbar sind.

Bei einem metallischen Band des elektrischen Verbindungselements, dessen Mittenachse mittels stoff- oder formschlüssigen Verbindens eines ersten axialen Endes mit einem zweiten axialen Ende des metallischen Bandes hergestellt ist, kann alternativ eine Erstreckung der ersten Abschnitte und der zweiten Abschnitte in einer Richtung parallel zur Mittenachse M jeweils gleich groß ausgebildet sein. Insbesondere kann die Geometrie der ersten Abschnitte des metallischen Bandes, d h. die Erstreckung der ersten Abschnitte des metallischen Bandes in einer Richtung zur Mittenachse und in einer Richtung quer zur Mittenachse des metallischen Bandes, der Geometrie der zweiten Abschnitte des metallischen Bandes entsprechen. In diesem Fall weist das planare metallische Band des elektrischen Verbindungselements ein gleichmäßiges wellenförmiges Profil auf.

Insbesondere wenn das Kontaktelement und das zugehörige Gegenkontaktelement, die das elektrische Verbindungselement jeweils kontaktiert, jeweils rotationssymmetrisch ausgebildet sind, können auf den ersten Abschnitten des metallischen Bandes zur Kontaktierung des Kontaktelements jeweils vorzugsweise zwei Kontaktpunkte und auf den zweiten Abschnitten des metallischen Bandes zur Kontaktierung des Gegenkontaktelements jeweils vorzugsweise ein einziger Kontaktpunkt vorgesehen sein. Bei einem derartigen Anwendungsfall kann unabhängig vom Herstellungsverfahren des elektrischen Verbindungselements eine Erstreckung der ersten Abschnitte des metallischen Bandes in einer Richtung parallel zur Mittenachse jeweils vorzugsweise auch größer als die Erstreckung der zweiten Abschnitte des metallischen Bandes ausgebildet sein.

In einer weiteren vorzugsweisen Ausprägung der Erfindung kann sich die Ausnehmung zwischen jeweils zwei benachbarten ersten Abschnitten des metallischen Bandes in einer Richtung zum jeweiligen zweiten Abschnitt des metallischen Bandes und kann sich die Ausnehmung zwischen jeweils zwei benachbarten zweiten Abschnitten des metallischen Bandes in der Richtung zum jeweiligen ersten Abschnitt des metallischen Bandes jeweils verjüngen.

Korrespondierend zur sich verjüngenden Geometrie der Ausnehmungen können sich die ersten Abschnitte und die zweiten Abschnitte des metallischen Bandes jeweils in einer Richtung zum ersten bzw. zweiten Seitenende des metallischen Bandes ebenfalls verjüngen. Eine derartige geometrische Ausformung des metallischen Bandes begünstigt einen wellenförmigen oder zickzackförmigen Verlauf des sich aus ersten Abschnitten und zweiten Abschnitten jeweils zusammensetzenden metallischen Bandes des elektrischen Verbindungelements.

In einer besonders vorzugsweisen Ausprägung der Erfindung können sich die Ausnehmungen zwischen jeweils zwei benachbarten ersten Abschnitten des metallischen Bandes bis in den gegenüberliegenden zweiten Abschnitt des metallischen Bandes schlitzförmig hineinerstrecken. Äquivalent können sich die Ausnehmungen zwischen jeweils zwei benachbarten zweiten Abschnitten des metallischen Bandes bis in den gegenüberliegenden ersten Abschnitt des metallischen Bandes schlitzförmig hineinerstrecken. Eine derartige schlitzförmige Erweiterung der einzelnen Ausnehmungen kann die Elastizität der gebogenen ersten Abschnitte und der gebogenen zweiten Abschnitte des metallischen Bandes zusätzlich erhöhen, um beispielsweise fertigungsbedingte Unebenheiten an der Innenmantelfläche des Kontaktelements und/oder an der Außenmantelfläche des Gegenkontaktelements vorteilhaft noch besser ausgleichen zu können.

Zur bevorzugten punktförmigen Kontaktierung des Kontaktelements und des Gegenkontaktelement kann an den ersten Abschnitten und an den zweiten Abschnitten jeweils wenigstens ein Kontaktpunkt ausgebildet sein. Der Kontaktpunkt kann jeweils als eine Kontaktbeule oder als eine Kontakterhöhung ausgebildet sein, die vorzugsweise jeweils mittels Prägung herstellbar ist.

Wie bereits erläutert sind bei der Kontaktierung eines rotationsymmetrisch ausgebildeten Kontaktelements und eines rotationsymmetrisch ausgebildeten Gegenkontaktelements vorzugsweise in den ersten Abschnitten des metallischen Bandes jeweils zwei Kontaktpunkte und in den zweiten Abschnitten des metallischen Bandes jeweils ein einziger Kontaktpunkt ausgebildet. Hierbei können bevorzugt an jeder Seitenkante der einzelnen ersten Abschnitte des metallischen Bandes jeweils ein Kontaktpunkt ausgebildet sein. Bevorzugt können auf einer mittigen Symmetrieachse der einzelnen zweiten Abschnitte des metallischen Bandes jeweils ein Kontaktpunkt ausgebildet sein.

Sind an den Seitenkanten der ersten und/oder der zweiten Abschnitte des metallischen Bandes jeweils ein Kontaktpunkt ausgebildet, so können die Seitenkanten der ersten Abschnitte und/oder der zweiten Abschnitte des metallischen Bandes gegenüber einem zwischen den Seitenkanten befindlichen mittigen Bereich der ersten und/oder der zweiten Abschnitte, insbesondere einer mittigen Symmetrieachse der ersten und/oder der zweiten Abschnitte, jeweils gekröpft ausgebildet sein. Eine derartige Erhöhung der Seitenkanten gegenüber einem mittigen Bereich, insbesondere einer mittigen Symmetrieachse, erhöht die an den Seitenkanten jeweils ausgebildeten Kontaktpunkte zusätzlich gegenüber den restlichen Flächenbereichen der ersten Abschnitte und/oder der zweiten Abschnitte. Somit kann eine Kontaktierung zwischen dem Kontaktpunkten des elektrischen Verbindungselements und dem Kontaktelement bzw. dem Gegenkontaktelement zusätzlich verbessert sein.

Vorzugsweise sind die einzelnen Kontaktpunkte jeweils an identischen Positionen innerhalb der ersten und der zweiten Abschnitte des metallischen Bandes auszubilden, um eine reguläre Verteilung der Kontaktpunkte innerhalb des elektrischen Verbindungselement zu verwirklichen. Denkbar ist aber auch jede beliebige andere lokale Anordnung eines Kontaktpunkts in den einzelnen ersten und zweiten Abschnitten des metallischen Bandes.

Von der Erfindung ist auch eine elektrische Verbindung mit abgedeckt, die einen elektrischen Verbinder und einen zugehörigen elektrischen Gegenverbinder aufweist:
Der elektrische Verbinder weist ein Kontaktelement auf, während der elektrische Gegenverbinder ein zugehöriges Gegenkontaktelement aufweist. Zwischen dem elektrischen Verbinder und dem elektrischen Gegenverbinder ist ein elektrisches Verbindungselement angeordnet. Hierbei kontaktieren die ersten Abschnitte des zum elektrischen Verbindungselement gehörigen metallischen Bandes jeweils das Kontaktelement und die zweiten Abschnitte des zum elektrischen Verbindungselement gehörigen metallischen Bandes jeweils das Gegenkontaktelement elektrisch und mechanisch. Die obig zum elektrischen Verbindungselement erläuterten technischen Ausprägungen, technischen Details, technischen Wirkungen und technischen Vorteile gelten äquivalent für die Anwendung des elektrischen Verbindungselements in der elektrischen Verbindung.

Das Kontaktelement und das Gegenkontaktelement können entweder jeweils ein Innenleiterkontaktelement oder jeweils ein Außenleiterkontaktelement sein. Vorzugsweise kann es sich bei der elektrischen Verbindung aus dem elektrischen Verbinder und einem zugehörigen elektrischen Gegenverbinder um eine elektrische Steckverbindung aus einem elektrischen Steckverbinder und einem zugehörigen elektrischen Gegensteckverbinder handeln. Denkbar ist aber auch, dass das elektrische Verbindungselement ein als ein metallisches Grundgehäuse ausgebildetes Außenleiterkontaktelement und ein als ein metallischer Gehäusedeckel ausgebildetes Außenleitergegenkontaktelement jeweils elektrisch und mechanisch kontaktiert. Das Grundgehäuse wird hierbei ohne einen Steckvorgang mit dem Gehäusedeckel elektrisch und mechanisch verbunden.

In einer vorzugsweisen Ausprägung der elektrischen Verbindung können das Kontaktelement und das zugehörige Gegenkontaktelement jeweils rotationssymmetrisch ausgebildet sein, d. h. das Kontaktelement kann buchsen- oder hülsenförmig und das Gegenkontaktelement kann stiftförmig ausgeformt sein. Das elektrische Verbindungselement weist somit vorzugsweise eine ringförmige Grundgeometrie auf. Alternativ können das Kontaktelement und das zugehörige Gegenkontaktelement der elektrischen Verbindung jeweils als ein Flachkontakt ausgebildet sein. In diesem Fall weist das elektrische Verbindungselement vorzugsweise eine lineare Grundgeometrie auf. Schließlich kann ein metallischer Gehäusedeckel, der ein Au-βenleitergegenkontaktelement der elektrischen Verbindung bildet, der Gehäusegeometrie eines metallischen Grundgehäuses folgen, das ein Außenleiterkontaktelement der elektrischen Verbindung bildet. Die ringförmige Grundgeometrie des elektrischen Verbindungselements passt sich hierbei der Gehäusegeometrie an.

Das elektrische Verbindungselement ist vorzugsweise in einer ringförmigen Aussparung des Kontaktelements eingefügt. Die Aussparung zur Aufnahme des elektrischen Verbindungselements kann vorzugsweise als eine ringförmige Nut an der Innenmantelfläche des Kontaktelements ausgebildet sein. Alternativ ist auch eine Kombination aus einer an der Innenmantelfläche des Kontaktelements ausgebildeten Schulter und wenigsten einer an der Innenmantelfläche des Kontaktelements ausgebildeten Rastlasche bzw. Rasthaken zur Aufnahme des elektrischen Verbindungselements denkbar. Das elektrische Verbindungselement ist vorzugsweise formschlüssig in der Aussparung des Kontaktelements fixiert. Eine kraftschlüssige oder eine stoffschlüssige Fixierung des elektrischen Verbindungselements am Kontaktelement ist in einer weniger bevorzugten Ausbildung auch denkbar. Die Fixierung des elektrischen Verbindungselements am Kontaktelement ermöglicht eine sichere elektrische Kontaktierung zwischen den einzelnen ersten Abschnitten des metallischen Bandes des elektrischen Verbindungselements mit dem Kontaktelement. In einer weniger bevorzugten Ausprägung der Erfindung kann das elektrische Verbindungselement auch in einer ringförmigen Aussparung des Gegenkontaktelements eingefügt sein.

Die Erfindung deckt schließlich auch ein Verfahren zur Herstellung eines elektrischen Verbindungselements mit ab, welches ein Kontaktelement mit einem zugehörigen Gegenkontaktelement elektrisch und mechanisch verbindet. Das Verfahren weist zumindest die folgenden Verfahrensschritte auf:
- Bereitstellen eines metallischen gestanzten Bands mit einer Mittenachse, wobei entlang der Mittenachse abwechselnd an einem ersten Seitenende des metallischen Bandes jeweils erste Abschnitte des metallischen Bandes und an einem zweiten Seitenende des metallischen Bandes jeweils zweite Abschnitte des metallischen Bandes ausgebildet sind, wobei jeder erste Abschnitt jeweils mit den beiden nächst benachbarten zweiten Abschnitten des metallischen Bandes verbunden ist, und
- Biegen der ersten Abschnitte und der zweiten Abschnitte jeweils um eine Rotationsachse, die jeweils parallel zur Mittenachse verläuft, so dass jeder gebogene erste Abschnitt das Kontaktelement jeweils zu kontaktieren vermag und jeder gebogene zweite Abschnitt das Gegenkontaktelement jeweils zu kontaktieren vermag.

Für den Fall, dass im Stanzvorgang noch kein metallisches Band des elektrischen Verbindungselements mit einer geschlossenen Mittenachse hergestellt wurde, kann das Verfahren zur Herstellung eines elektrischen Verbindungselements auch noch den zusätzlichen Verfahrensschritt des stoff- oder formschlüssigen Verbindens eines ersten axiales Endes des metallischen Bandes mit einem zweiten axialen Ende des metallischen Bandes enthalten.

An dieser Stelle sei betont, dass die genannten Verfahrensschritte nicht unbedingt in der Reihenfolge durchgeführt werden müssen, in der sie erstmals beschrieben oder erwähnt sind. Es können daher beispielsweise einzelne Verfahrensschritte oder Gruppen von Verfahrensschritten untereinander austauschbar sein, wenn dies technisch nicht ausgeschlossen ist. Auch können Verfahrensschritte miteinander kombiniert, in separate Zwischenschritte aufgeteilt oder mit Zwischenschritten ergänzt werden. Das Verfahren ist mit den beschriebenen Verfahrensschritten auch nicht unbedingt abschließend beschrieben und kann mit weiteren, auch nicht genannten Verfahrensschritten ergänzt werden.

Die obig zum elektrischen Verbindungselement und zur elektrischen Verbindung jeweils erläuterten technischen Ausprägungen, technischen Details, technischen Wirkungen und technischen Vorteile gelten äquivalent für die Herstellung des elektrischen Verbindungselements.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1A: eine Darstellung eines planaren Stanzbildes einer ersten Ausführungsform des erfindungsgemäßen elektrischen Verbindungselements,
- Fig. 1B: eine Darstellung der vorgebogenen ersten Ausführungsform des erfindungsgemäßen elektrischen Verbindungselements,
- Fig. 1C: eine isometrische Darstellung der final hergestellten ersten Ausführungsform des erfindungsgemäßen elektrischen Verbindungselements,
- Fig. 1D: eine Draufsicht der ersten Ausführungsform des erfindungsgemäßen elektrischen Verbindungselements,
- Fig. 1E: eine Seitenansicht der ersten Ausführungsform des erfindungsgemäßen elektrischen Verbindungselements,
- Fig. 1F: eine Teildarstellung der ersten Ausführungsform des erfindungsgemäßen elektrischen Verbindungselements mit einer axialen Verbindung des metallischen Bandes,
- Fig. 2A: eine Darstellung eines planaren Stanzbildes einer zweiten Ausführungsform des erfindungsgemäßen elektrischen Verbindungselements,
- Fig. 2B: eine isometrische Darstellung der final hergestellten zweiten Ausführungsform des erfindungsgemäßen elektrischen Verbindungselements,
- Fig. 2C: eine Teildarstellung der zweiten Ausführungsform des erfindungsgemäßen elektrischen Verbindungselements,
- Fig. 2D: eine Draufsicht der zweiten Ausführungsform des erfindungsgemäßen elektrischen Verbindungselements,
- Fig. 2E: eine Seitenansicht der zweiten Ausführungsform des erfindungsgemäßen elektrischen Verbindungselements,
- Fig. 3A: eine Darstellung mit außenseitigen Kontaktpunkten des erfindungsgemäßen elektrischen Verbindungselements,
- Fig. 3B: eine Darstellung mit innenseitigen Kontaktpunkten des erfindungsgemäßen elektrischen Verbindungselements,
- Fig. 3C: eine Darstellung mit außenseitigen Kontaktpunkten an gekröpften Federlaschen des erfindungsgemäßen elektrischen Verbindungselements,
- Fig. 3D: eine Darstellung mit innenseitigen Kontaktpunkten an gekröpften Federlaschen des erfindungsgemäßen elektrischen Verbindungselements und
- Fig. 4: eine Darstellung einer erfindungsgemäßen elektrischen Verbindung.

Die beiliegenden Figuren der Zeichnung sollen ein weiteres Verständnis der Ausführungsformen der Erfindung vermitteln.

Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

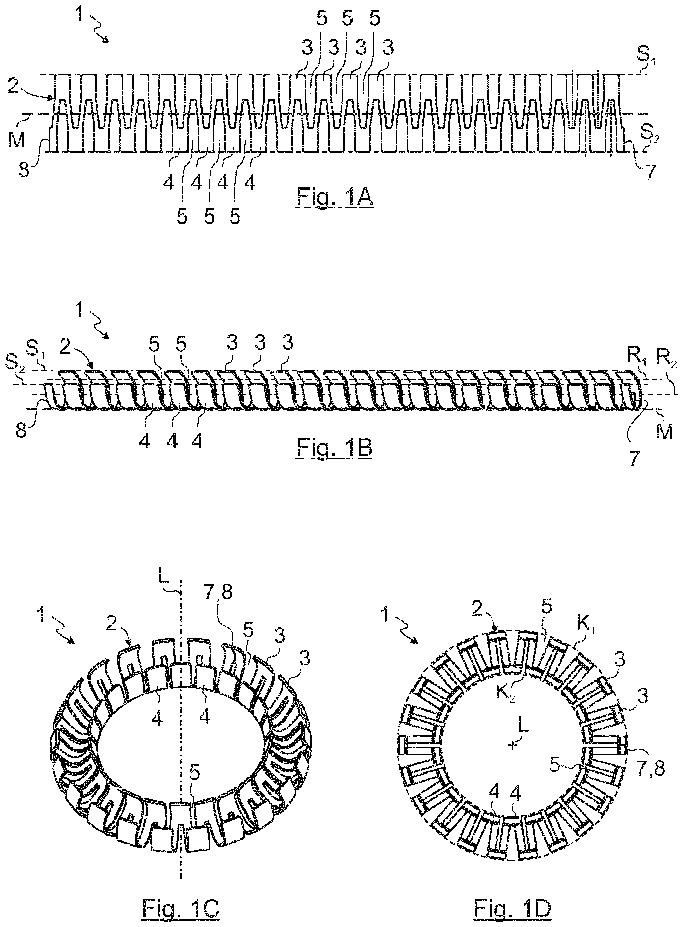

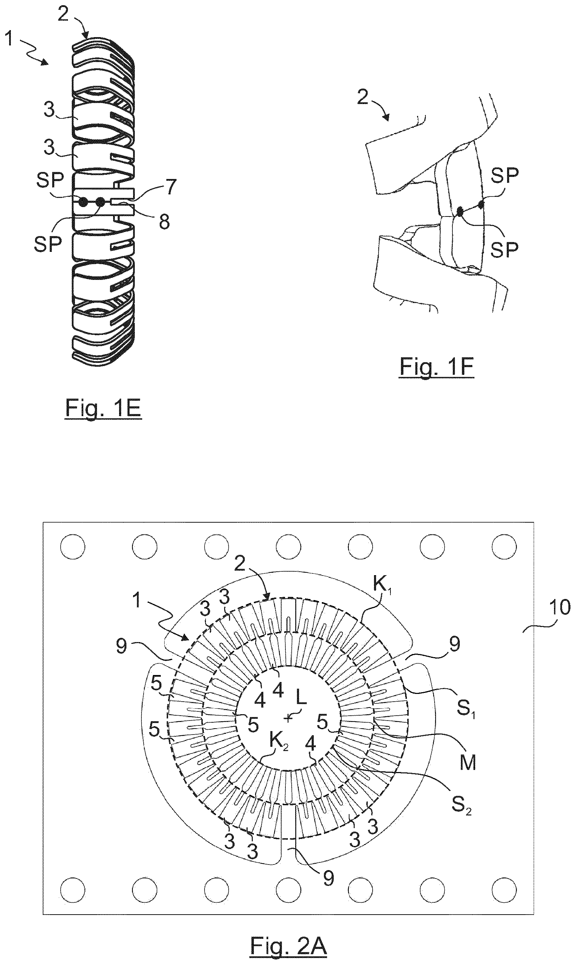

In den Figuren 1A bis 1C ist eine erste Ausführungsform des elektrischen Verbindungselements 1 jeweils in seinen einzelnen Fertigungsschritten dargestellt:
Aus Fig. 1A geht das planare Stanzbild des elektrischen Verbindungselements 1 hervor. Das metallische Band 2 des elektrischen Verbindungselements 1 weist entlang seiner Mittenachse M eine Längserstreckung und zwischen einem ersten Seitenende S₁ und einem zweiten Seitenende S₂ eine Quererstreckung auf. Das metallische Band 2 weist entlang seiner Mittenachse M einen periodischen Verlauf mit ersten Abschnitten 3 am ersten Seitenende S₁ und zweiten Abschnitten 4 am zweiten Seitenende S₂ auf. Zur Verwirklichung des periodischen Verlaufes, insbesondere eines wellenförmigen Verlaufes, ist die Geometrie der einzelnen ersten Abschnitte 3 und der einzelnen zweiten Abschnitte 4 des metallischen Bandes 2, wie in Fig. 1 dargestellt ist, jeweils identisch ausgebildet. Äquivalent ist die Geometrie der Ausnehmungen 5 zwischen jeweils zwei benachbarten ersten Abschnitten 3 und der Ausnehmungen 5 zwischen jeweils zwei benachbarten zweiten Abschnitten 4 jeweils identisch ausgebildet.

Die Ausnehmungen 5 verjüngen sich jeweils in Richtung der Mittenachse M. Die Ausnehmungen 5, welche jeweils zwischen zwei benachbarten ersten Abschnitten 3 ausgebildet sind, erstrecken sich jeweils bis in die zweiten Abschnitte 4 hinein. Äquivalent erstrecken sich die Ausnehmungen 5, welche jeweils zwischen zwei benachbarten zweiten Abschnitten 4 ausgebildet sind, jeweils bis in die ersten Abschnitte 3 hinein. Somit wird die Elastizität der ersten Abschnitte 3 und der zweiten Abschnitte 4 des metallischen Bandes 2 zusätzlich erhöht, um Unebenheiten in den Kontaktflächen des Kontaktelements und/oder des Gegenkontaktelements besser auszugleichen.

Das gestanzte metallische Band 2 kann als ein Einzelteil oder durch Vereinzelung aus einer gestanzten Meterware hergestellt sein. Im ersten Fall ist das metallische Band 2 im Bereich des ersten Seitenendes S₁ und des zweiten Seitenendes S₂ in bestimmten Abständen jeweils mit einem in Fig. 1A nicht dargestellten Trägerstreifen verbunden, um einen mechanisch stabilen Transport des metallischen Bandes 2 durch den Stanzautomaten zu sichern. Bei einer Meterware des metallischen Bandes 2 kann das metallische Band 2 alternativ zum Transport durch Trägerstreifen auch durch eine Mehrzahl von Dornen des Stanzautomaten geführt sein, die in bestimmten Abständen jeweils in die Ausnehmungen 5 im Bereich der Mittenachse M des metallischen Bandes 2 in das metallische Band 2 eingreifen.

Nach dem Biegen der ersten Abschnitte 3 und der zweiten Abschnitte 4 des metallischen Bandes 2 um eine zugehörige Rotationsachse R₁, R₂, die jeweils parallel zur Mittenachse M verläuft, ergibt sich gemäß Fig. 1B ein gebogenes metallisches Band 2 mit einer wannenförmigen Grundstruktur und einem C-förmigen Querschnittsprofil. Das C-förmige Querschnittsprofil des metallischen Bandes 2 ergibt sich, wenn die ersten Abschnitte 3 des metallischen Bandes 2 jeweils um eine zugehörige Rotationsachse R₁ in einer entgegengesetzten Rotationsrichtung zum Biegen der zweiten Abschnitten 4 um eine zugehörige Rotationsachse R₂ gebogen werden.

In einem finalen Fertigungsschritt wird das erste axiale Ende 7 des metallischen Bandes 2 mit dem zweiten axialen Ende 8 des metallischen Bandes 2 stoff- oder formschlüssig verbunden und es entsteht ein relativ zu einer Längsachse L des elektrischen Verbindungselement 1 ringförmig ausgebildetes elektrisches Verbindungselement 1 gemäß Fig. 1C. Das erste axiale Ende 7 und das zweite axiale Ende 8 des metallischen Bandes 2 sind im Fall einer stoffschlüssigen Verbindung vorzugsweise über eine Löt- oder Schweißverbindung, beispielsweise über zwei Schweißpunkte SP wie in einer Teildarstellung des elektrischen Verbindungselements 1 in Fig. 1F dargestellt, oder im Fall einer formschlüssigen Verbindung vorzugsweise über Clinchen miteinander verbunden.

In der Draufsicht des elektrischen Verbindungselements 1 in Fig. 1D ist die außenseitige Anordnung der gebogenen ersten Abschnitte 3 des metallischen Bandes 2 erkennbar, welche jeweils ein Kontaktelement eines elektrischen Verbinders auf einer äußeren Kreislinie K₁ radial nach außen relativ zur Längsachse L des elektrischen Verbindungselements 1 elektrisch und mechanisch kontaktieren. Ebenfalls ist in Fig. 1D die innenseitige Anordnung der zweiten Abschnitte 4 des metallischen Bandes 2 erkennbar, welche jeweils ein Gegenkontaktelement eines elektrischen Gegenverbinders auf einer inneren Kreislinie K₂ radial nach innen relativ zur Längsachse L elektrisch und mechanisch kontaktieren.

In einer Seitenansicht des elektrischen Verbindungselements 1 gemäß Fig. 1E sind die außenseitig ausgebildeten ersten Abschnitte 3 des metallischen Bandes 2 erkennbar. In Fig. 1E ist die stoffschlüssige Verbindung zwischen dem ersten axialen Ende 7 und dem zweiten axialen Ende 8 des metallischen Bandes 2 mittels zweier Schweißpunkte SP erkennbar.

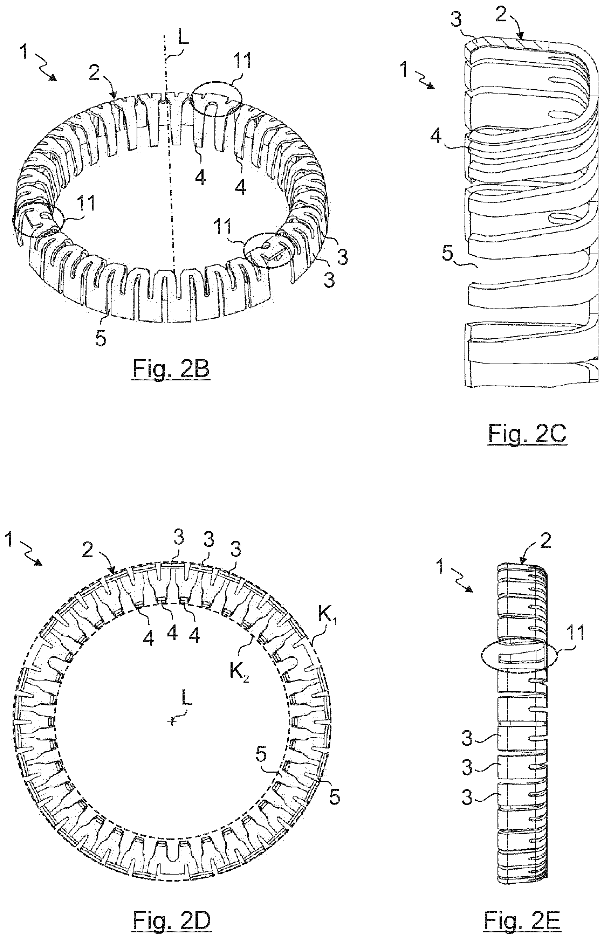

In den Figuren 2A und 2B ist eine zweite Ausführungsform des erfindungsgemäßen elektrischen Verbindungselement 1 in seinen beiden Fertigungsschritten dargestellt:
Im planaren Stanzbild des metallischen Bandes 2 gemäß Fig. 2A ist das metallische Band 2 bereits kreisförmig ausgebildet und weist somit eine kreisförmig geschlossene Mittenachse M auf. Die ersten Abschnitte 3 des metallischen Bandes 2 sind hierbei radial außerhalb der Mittenachse M zwischen der kreisförmigen Mittenachse M und dem kreisförmigen Seitenende S₁ angeordnet. Sie weisen relativ zur Längsachse L des elektrischen Verbindungselements 1 ausgehend von der Mittenachse M eine radial nach außen gerichtete Erstreckung auf. Die zweiten Abschnitte 4 des metallischen Bandes 2 sind hierbei radial innerhalb der Mittenachse M zwischen der kreisförmigen Mittenachse M und dem kreisförmigen Seitenende S₂ angeordnet. Sie weisen ausgehend von der Mittenachse M eine radial nach innen gerichtete Erstreckung auf. Aufgrund dieser Anordnung der ersten Abschnitte 3 und der zweiten Abschnitte 4 des metallischen Bandes 2 weisen die ersten Abschnitte 3 in einer tangentialen Richtung zur kreisförmigen Mittenachse M eine größere Erstreckung als die zweiten Abschnitte 4 auf.

Die Ausnehmungen 5 zwischen jeweils zwei benachbarten ersten Abschnitten 3 und zwischen jeweils zwei benachbarten zweiten Abschnitten 4 des metallischen Bandes 2 sind in der zweiten Ausführungsform des elektrischen Verbindungselement 1 jeweils ebenfalls in einer Richtung zur Mittenachse M des metallischen Bandes 2 verjüngt ausgebildet. Auch bei der zweiten Ausführungsform des elektrischen Verbindungselements 1 erstrecken sich die Ausnehmungen 5, welche jeweils zwischen zwei benachbarten ersten Abschnitten 3 des metallischen Bandes 2 ausgebildet sind, bis in die zweiten Abschnitte 4 hinein. Ebenso erstrecken sich die Ausnehmungen 5, welche jeweils zwischen zwei benachbarten zweiten Abschnitten 4 des metallischen Bandes 2 ausgebildet sind, bis in die ersten Abschnitte 3 hinein. Hierdurch wird die Elastizität der ersten Abschnitte 3 und der zweiten Abschnitte 4 des metallischen Bandes 2 zusätzlich erhöht.

Das kreisförmig geschlossene metallische Band 2 ist über beispielsweise drei Verbindungsbereiche 9 mit einem Trägerstreifen 10 verbunden.

Nach dem Biegen der ersten Abschnitte 3 und der zweiten Abschnitte 4 des metallischen Bandes 2 um eine zugehörige Rotationsachse in einem weiteren Fertigungsschritt ergibt sich das final hergestellte elektrische Verbindungselement 1 gemäß Fig. 2B, dessen metallisches Band 2 eine ringförmige Grundstruktur und ein C-förmiges Querschnittsprofil aufweist. Aus Fig. 2B sind die beispielsweise drei Trennbereiche 11 erkennbar, in denen das final hergestellte elektrische Verbindungselement 1 jeweils von einem Verbindungsbereich 9 zum Trägerstreifen 10 getrennt ist.

Die einzelnen gebogenen ersten Abschnitte 3 des metallischen Bandes 2, die jeweils mit den beiden nächst benachbarten zweiten Abschnitten 4 des metallischen Bandes 2 verbunden sind, und die einzelnen gebogenen zweiten Abschnitte 4 des metallischen Bandes 2, die jeweils mit den beiden nächst benachbarten ersten Abschnitten 3 des metallischen Bandes 2 verbunden sind, stellen gemäß Fig. 2C jeweils einen Federarm dar. In der Anordnung des elektrischen Verbindungselement 1 zwischen dem Kontaktelement und dem Gegenkontaktelement der elektrischen Verbindung können die als Federarme jeweils ausgebildeten ersten Abschnitte 3 das Kontaktelement und die als Federarme jeweils ausgebildeten zweiten Abschnitte 4 des metallischen Bandes 2 das Gegenkontaktelements jeweils mit einem ausreichenden Kontaktdruck kontaktieren.

In der Draufsicht der zweiten Ausführungsform des elektrischen Verbindungselements 1 in Fig. 2D ist die außenseitige Anordnung der gebogenen ersten Abschnitte 3 des metallischen Bandes 2 zu erkennen, welche jeweils ein Kontaktelement einer elektrischen Steckverbindung auf einer äußeren Kreislinie K₁ radial nach außen relativ zur Längsachse L elektrisch und mechanisch kontaktieren. Ebenfalls ist in Fig. 2D die innenseitige Anordnung der zweiten Abschnitte 4 des metallischen Bandes 2 erkennbar, welche jeweils ein Gegenkontaktelement einer elektrischen Verbindung auf einer inneren Kreislinie K₂ radial nach innen relativ zur Längsachse L elektrisch und mechanisch kontaktieren.

In einer Seitenansicht der zweiten Ausführungsform des elektrischen Verbindungselements 1 gemäß Fig. 2E sind die außenseitig ausgebildeten ersten Abschnitte 3 des metallischen Bandes 2 erkennbar. In Fig. 2E ist einer der drei Trennbereiche 11 erkennbar, in dem jeweils das final hergestellte elektrische Verbindungselement 1 vom Verbindungsbereich 9 zum Trägerstreifen 10 getrennt ist.

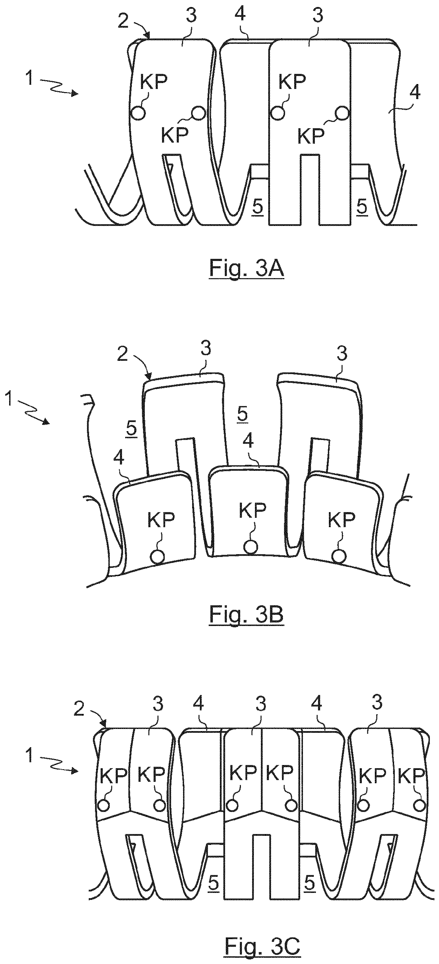

In Fig. 3A ist die Ausbildung von vorzugsweise zwei Kontaktpunkten KP in den ersten Abschnitten 3 des metallischen Bandes 2 dargestellt, während aus Fig. 3B die Ausbildung von vorzugsweise einem einzigen Kontaktpunkt KP in den zweiten Abschnitten 4 des metallischen Bandes 2 hervorgeht. Hierbei ist an den beiden Seitenkanten der ersten Abschnitte 3 des metallischen Bandes 2 jeweils ein Kontaktpunk 12 und in einem Mittenbereich, vorzugsweise auf einer mittigen Symmetrieachse zwischen den beiden Seitenkanten, der zweiten Abschnitte 4 des metallischen Bandes 2 jeweils ein Kontaktpunkt KP mittels beispielsweise einer Prägung oder einer Ausbeulung verwirklicht.

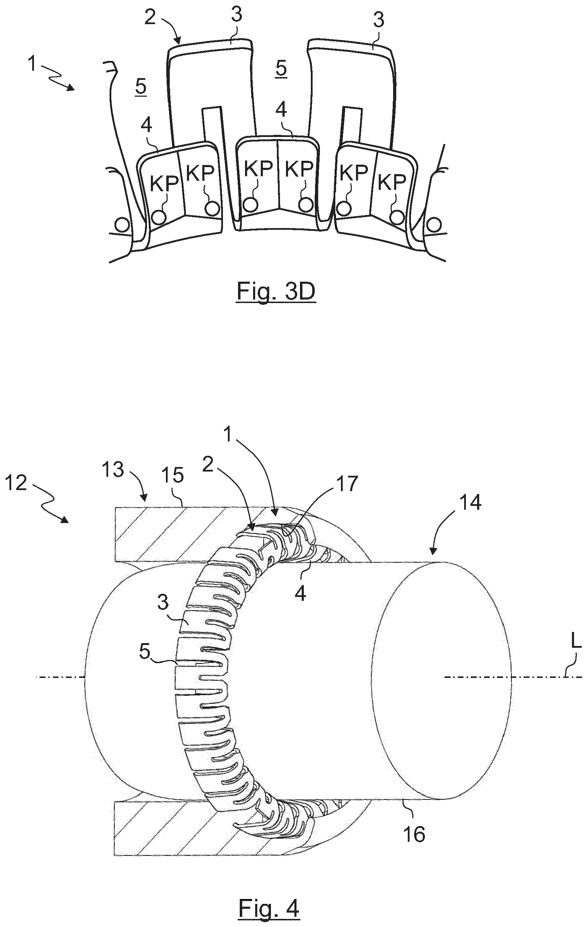

Sind in den einzelnen ersten Abschnitten 3 und in den einzelnen zweiten Abschnitten 4 des metallischen Bandes 2 jeweils zwei Kontaktpunkte KP ausgebildet, so können die beiden Seitenkanten der ersten Abschnitte 3 und der zweiten Abschnitte 4 des metallischen Bandes 2, an denen jeweils ein Kontaktpunkt KP ausgebildet ist, gemäß der Fig. 3C und 3D jeweils gekröpft ausgebildet sein. Somit sind die Kontaktpunkte KP zur Restfläche der ersten Abschnitte 3 bzw. der zweiten Abschnitte 4 jeweils zusätzlich erhöht ausgebildet und ermöglichen somit eine verbesserte Kontaktierung.

Die Fig. 4 stellt schließlich eine elektrische Verbindung 12, vorzugsweise eine elektrische Steckverbindung, aus einem elektrischen Verbinder 13, vorzugsweise einem elektrischen Steckverbinder, und einem zugehörigen elektrischen Gegenverbinder 14, vorzugsweise einem elektrischen Gegensteckverbinder, dar. Der elektrische Verbinder 13 weist beispielsweise ein buchsenförmiges Kontaktelement 15 und der elektrische Gegenverbinder 14 beispielsweise ein stiftförmiges Gegenkontaktelement 16 auf. Zwischen dem buchsenförmigen Kontaktelement 15 und dem stiftförmigen Gegenkontaktelement 16 ist das elektrische Verbindungselement 1 angeordnet. Das ringförmige elektrische Verbindungselement 1 ist in einer ringförmigen Aussparung 17 des Kontaktelements 15 eingefügt und mit diesem formschlüssig mechanisch verbunden.

Aus Fig. 4 ist zu erkennen, dass die ersten Abschnitte 3 des metallischen Bandes 2 des ringförmigen elektrischen Verbindungselements 1 jeweils in äquidistanten Winkelsegmenten radial nach außen relativ zur Längsachse L des elektrischen Verbindungselements 1 das Kontaktelement 15 kontaktieren. Die zweiten Abschnitte 4 des metallischen Bandes 2 des ringförmigen elektrischen Verbindungselements 1 kontaktieren jeweils in äquidistanten Winkelsegmenten radial nach innen relativ zur Längsachse L des elektrischen Verbindungselement 1 das Gegenkontaktelement 16.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Elektrisches Verbindungselement (1) zum elektrischen Verbinden eines Kontaktelements (15) mit einem zugehörigen Gegenkontaktelement (16) aufweisend ein metallisches Band (2) mit einer Mittenachse M, wobei entlang der Mittenachse M abwechselnd an einem ersten Seitenende S₁ des metallischen Bandes (2) jeweils erste Abschnitte (3) des metallischen Bandes (2) und an einem zweiten Seitenende S₂ des metallischen Bandes (2) jeweils zweite Abschnitte (4) des metallischen Bandes (2) ausgebildet sind, wobei jeder erste Abschnitt (3) jeweils mit den beiden nächst benachbarten zweiten Abschnitten (4) des metallischen Bandes (2) verbunden ist, wobei die ersten Abschnitte (3) und die zweiten Abschnitte (4) jeweils um eine Rotationsachse R₁, R₂ gebogen sind, die jeweils parallel zur Mittenachse M verläuft, wobei jeder erste Abschnitt (3) jeweils derart gebogen ist, um jeweils das Kontaktelement (15) zu kontaktieren, und jeder zweite Abschnitt (4) jeweils derart gebogen ist, um jeweils das Gegenkontaktelement (16) zu kontaktieren.

2. Elektrisches Verbindungselement (1) nach Anspruch 1, **dadurch gekennzeichnet,**
**dass** das elektrische Verbindungselement (1) als ein StanzBiegeteil hergestellt ist.

3. Elektrisches Verbindungselement (1) nach Anspruch 1 oder 2, **dadurch gekennzeichnet,**
**dass** die Mittenachse M relativ zu einer Längsachse L des elektrischen Verbindungselements (1) kreisförmig gebogen ist, wobei das elektrische Verbindungselement (1) eingerichtet ist, das Kontaktelement radial nach außen relativ zur Längsachse L und das Gegenkontaktelement (16) radial nach innen relativ zur Längsachse L elektrisch und mechanisch zu kontaktieren, wobei vorzugsweise jeder erste Abschnitt (3) jeweils derart gebogen ist, um das Kontaktelement (15) jeweils radial nach außen elektrisch und mechanisch zu kontaktieren, und jeder zweite Abschnitt (4) jeweils derart gebogen ist, um das Gegenkontaktelement (16) jeweils radial nach innen elektrisch und mechanisch zu kontaktieren.

4. Elektrisches Verbindungselement (1) nach einem der Ansprüche 1 bis 3,
**dadurch gekennzeichnet,**
**dass** die ersten Abschnitte (3) in einer entgegengesetzten Drehrichtung als die zweiten Abschnitte (4) gebogen sind.

5. Elektrisches Verbindungselement (1) nach einem der Ansprüche 1 bis 4,
**dadurch gekennzeichnet,**
**dass** ein Querschnittsprofil des elektrischen Verbindungselements (1) C-förmig ausgebildet ist.

6. Elektrisches Verbindungselement (1) nach einem der Anspruch 1 bis 5,
**dadurch gekennzeichnet,**
**dass** das metallische Band (2) entlang der Mittenachse M kreisförmig geschlossen ist.

7. Elektrisches Verbindungselement (1) nach Anspruch 6, **dadurch gekennzeichnet,**
**dass** das metallische Band (2) ein erstes axiales Ende (7) und ein mit dem ersten axialen Ende (7) stoff- oder formschlüssig verbundenes zweites axiales Ende (8) aufweist.

8. Elektrisches Verbindungselement (1) nach einem der Ansprüche 1 bis 7,
**dadurch gekennzeichnet,**
**dass** eine Erstreckung der ersten Abschnitte (3) in einer Richtung parallel zur Mittenachse M jeweils größer als die Erstreckung der zweiten Abschnitte (4) ausgebildet ist.

9. Elektrisches Verbindungselement (1) nach einem Ansprüche 1 bis 8,
**dadurch gekennzeichnet,**
**dass** sich eine Ausnehmung (5) zwischen jeweils zwei benachbarten ersten Abschnitten (3) in einer Richtung zum jeweiligen zweiten Abschnitt (4) und eine Ausnehmung (5) zwischen jeweils zwei benachbarten zweiten Abschnitten (4) in einer Richtung zum jeweiligen ersten Abschnitt (3) jeweils verjüngt.

10. Elektrisches Verbindungselement (1) nach einem Ansprüche 1 bis 9,
**dadurch gekennzeichnet,**
**dass** an den ersten Abschnitten (3) und an den zweiten Abschnitten (4) jeweils wenigstens ein Kontaktpunkt (KP) ausgebildet ist.

11. Elektrisches Verbindungselement (1) nach Anspruch 10, **dadurch gekennzeichnet,**
**dass** an den ersten Abschnitten (3) jeweils zwei Kontaktpunkte (KP) ausgebildet sind und an den zweiten Abschnitten (4) jeweils ein einziger Kontaktpunkt (KP) ausgebildet ist.

12. Elektrisches Verbindungselement (1) nach Anspruch 11, **dadurch gekennzeichnet,**
**dass** an Seitenkanten der ersten Abschnitte (3) und/oder der zweiten Abschnitte (4) jeweils ein Kontaktpunkt (KP) ausgebildet ist, wobei die Seitenkanten gegenüber einem zwischen den Seitenkanten befindlichen Bereich der ersten Abschnitte (3) und der zweiten Abschnitte (4) jeweils gekröpft ausgebildet sind.

13. Elektrische Verbindung (12) aufweisend einen elektrischen Verbinder (13) und einen zugehörigen elektrischen Gegenverbinder (14), wobei der elektrische Verbinder (13) ein Kontaktelement (15) und der elektrische Gegenverbinder (14) ein zugehöriges Gegenkontaktelement (16) aufweisen, wobei zwischen dem elektrischen Verbinder (13) und dem elektrischen Gegenverbinder (14) ein elektrisches Verbindungselement (1) gemäß einem der Ansprüche 1 bis 12 angeordnet ist, wobei die ersten Abschnitte (3) jeweils das Kontaktelement (15) und die zweiten Abschnitte (4) jeweils das Gegenkontaktelement (16) elektrisch und mechanisch kontaktieren.

14. Verfahren zur Herstellung eines elektrischen Verbindungselements (1) zum elektrischen Verbinden eines Kontaktelements (15) mit einem zugehörigen Gegenkontaktelement (16) aufweisend zumindest die folgenden Verfahrensschritte:
- Bereitstellen eines metallischen gestanzten Bands (2) mit einer Mittenachse M, wobei entlang der Mittenachse M abwechselnd an einem ersten Seitenende S₁ des metallischen Bandes (2) jeweils erste Abschnitte (3) des metallischen Bandes (2) und an einem zweiten Seitenende S₂ des metallischen Bandes (2) jeweils zweite Abschnitte (4) des metallischen Bandes (2) ausgebildet sind, wobei jeder erste Abschnitt (3) jeweils mit den beiden nächst benachbarten zweiten Abschnitten (4) des metallischen Bandes (2) verbunden ist, und
- Biegen der ersten Abschnitte (3) und der zweiten Abschnitte (4) jeweils um eine Rotationsachse R₁, R₂, die jeweils parallel zur Mittenachse M verläuft, so dass jeder gebogene erste Abschnitt (3) das Kontaktelement (15) jeweils zu kontaktieren vermag und jeder gebogene zweite Abschnitt (4) das Gegenkontaktelement (16) jeweils zu kontaktieren vermag.

15. Verfahren zur Herstellung eines elektrischen Verbindungselements (1) nach Anspruch 14
**dadurch gekennzeichnet,**
**dass** zusätzlich der folgende Verfahrensschritt vorgesehen ist:
- stoff- oder formschlüssiges Verbinden eines ersten axiales Endes (7) des metallischen Bandes (2) mit einem zweiten axialen Ende (8) des metallischen Bandes (2).
